Europäisches Patentamt

European Patent Office

Office européen des brevets

(19)

(11) **EP 1 396 740 A1**

(12) **EUROPÄISCHE PATENTANMELDUNG**

(43) Veröffentlichungstag:
**10.03.2004 Patentblatt 2004/11**

(51) Int Cl.⁷: $G02B\ 6/00$

(21) Anmeldenummer: **03090288.6**

(22) Anmeldetag: **08.09.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **07.09.2002 DE 10241566**

(71) Anmelder: **Dr.-Ing. Willing GmbH
96110 Schesslitz-Burgellern (DE)**

(72) Erfinder: **Willing, Achim
96110 Schesslitz-Burgellern (DE)**

(74) Vertreter: **Pfenning, Meinig & Partner GbR
Joachimstaler Strasse 10-12
10719 Berlin (DE)**

(54) **Notleuchte zur Beleuchtung eines Fluchtweges**

(57)    Es wird eine Notleuchte zur Beleuchtung eines Fluchtweges mit mindestens einem Lichtleitkörper (1,30) aus klar transparentem Material, der mindestens eine Lichteintrittsfläche und Lichtaustrittsfläche aufweist und mindestens eine Lichtquelle zur Einstrahlung von Licht in die Lichteintrittsfläche vorgesehen ist, wobei der Lichtleitkörper im Wesentlichen scheiben- oder plattenförmig mit im Vergleich zu den Deckflächen schmaleren Seitenkanten ausgebildet ist. Der Lichtleitkörper (1,30) ist dreieckförmig ausgebildet und das Dreieck wird von den planen Seitenkanten begrenzt, wobei eine erste der Seitenkanten (4,31) die Lichteintrittsfläche und eine zweite der Seitenkanten (32,2), die im rechten Winkel zur ersten Seitenkante (4,31) angeordnet ist, die Lichtaustrittsfläche bildet und wobei die dritte der Seitenkanten (33,3) verspiegelt ist. Das Licht tritt somit aus der schmalen Seitenkante aus, während die großen Deckflächen des Dreiecks nicht oder unwesentlich zur Beleuchtung beitragen. Die so gebildete Wegebeleuchtung kann mit einer eine Lichtleitplatte aufweisenden Rettungszeichenleuchte kombiniert werden, wobei Lichtleitkörper und Lichtleitplatte n parallelen Ebenen zueinander angeordnet werden.

Fig. 3

EP 1 396 740 A1

**Beschreibung**

Die Erfindung betrifft eine Notleuchte zur Beleuchtung eines Fluchtweges nach dem Oberbegriff des Hauptanspruchs.

Not- bzw. Fluchtleuchten sind grundsätzlich bekannt, beispielsweise gibt es Scheibenleuchten, die einen mit Hinweiselementen versehenen plattenförmigen Lichtleitkörper aufweisen, in den Licht über eine Seitenkante eingestrahlt wird, das gegebenenfalls unter Reflexion an der mit einer reflektierenden Schicht versehenen Rückseite an der Vorderseite mit den Hinweiselementen austritt.

Es besteht in der Notbeleuchtung der Bedarf, Wandleuchten einerseits so zu gestalten, dass eine möglichst große Flurlänge beleuchtet wird, andererseits durch diese Beleuchtung aber auch keine zusätzliche Blendung hervorgerufen wird. Aus Gründen der Wirtschaftlichkeit soll außerdem das gesamte Licht auf den Bodenbereich konzentriert werden. Diese Aufgabenstellung kann theoretisch mit einer Reflektoranordnung gelöst werden, jedoch soll ein möglichst großer Lampenlichtstrom von einer möglichst flachen Anordnung, die nur wenig auf der Wand aufbaut, aufgenommen und entsprechend den Vorgaben umverteilt werden.

Der Erfindung liegt somit die Aufgabe zugrunde, eine Notleuchte zur Beleuchtung eines Fluchtweges zu schaffen, die möglichst kompakt und flach gestaltet ist und mit der ohne aufwendige Technik die Hauptlichtrichtung umlenkbar ist, so dass eine möglichst große Flurlänge beleuchtet wird.

Diese Aufgabe wird erfindungsgemäß durch die kennzeichnenden Merkmale des Hauptanspruchs in Verbindung mit den Merkmalen des Oberbegriffs gelöst.

Dadurch, dass der im Wesentlichen scheiben- oder plattenförmige Lichtleitkörper mit im Vergleich zu den Deckflächen schmaleren Seitenkanten dreieckförmig ausgebildet ist und das Dreieck von den planen Seitenkanten begrenzt wird, wobei eine erste der Seitenkanten die Lichteintrittsfläche und eine zweite der Seitenkanten, die in rechtem Winkel zur ersten Seitenkante angeordnet ist, die Lichtaustrittsfläche bildet, und wobei die dritte der Seitenkanten verspiegelt ist, wird eine optische Vorrichtung im einer im rechten Winkel zur Lichteintrittsfläche stehenden Lichtaustrittsfläche zur Verfügung gestellt, die bei halbräumlicher Einstrahlung auf die Lichteintrittsfläche den Raumwinkel, in den Licht abgestrahlt wird, verkleinert, z.B. halbiert, wobei aufgrund der flachen Ausbildung des Lichtleitkörpers eine geringe Aufbauhöhe der Leuchte erzielt wird. Dies ist beispielsweise bei Notleuchten für Wandaufbau, z.B. in Tunneln besonders vorteilhaft.

Die im Dreieck angeordneten planen Begrenzungsflächen des Lichtleitkörpers, der vorzugsweise von möglichst hoher optischer Güte ist, so dass bei Brechung und Reflexion möglichst ausschließlich gerichtete Anteile auftreten, bilden eine kantenförmige Lichteintrittsfläche, eine Lichtaustrittsfläche und eine Spiegelfläche, die verspiegelt ist bzw. mit einer Spiegelschicht abgeschlossen ist. Lichteintrittsfläche und Lichtaustrittsfläche bleiben frei. Um die Hauptlichtrichtung umlenken zu können, ist die Lichteintrittskante des Lichtleitkörpers im rechten Winkel zur Lichtaustrittsfläche angeordnet. Somit kann eine auftreffende beliebige Lichtverteilung prinzipiell in eine Richtung umgelenkt werden, die quer zur Hauptstrahlrichtung der Eingangslichtverteilung gerichtet ist.

Die über die Lichteintrittsfläche in den Lichtleitkörper eingestrahlte Lichtmenge gelangt entweder direkt oder nach Totalreflexion an der Lichtaustrittsfläche auf die Spiegelfläche und wird dort in Winkelbereichen reflektiert, die einen Durchtritt durch die Lichtaustrittsfläche mit der gewünschten Lichtverteilungscharakteristik ermöglichen. Die Form der Lichtverteilungscharakteristik kann durch den Winkel zwischen der Spiegelfläche und der Lichtaustritts- bzw. der Lichteintrittsfläche bestimmt werden.

Durch die in den Unteransprüchen angegebenen Maß nahmen sind vorteilhafte Weiterbildungen und Verbesserungen möglich.

Besonders günstig ist ein Winkel zwischen Spiegelfläche und Lichtaustrittsfläche, der dem halben Wert des Grenzwinkels der Totalreflexion des verwendeten Lichtleitmaterials entspricht. Der Grenzwinkel der Totalreflexion wird durch die folgende Formel gegeben:

$$n \times \sin(\alpha) = 1,$$

wobei n der Brechungsindex und $\alpha$ der Grenzwinkel ist.

Bei diesem Winkel ergibt sich eine Lichtverteilung auf der Lichtaustrittsfläche, bei der eine in ausreichend großer Entfernung über der Lichtaustrittsfläche aufgespannte Fläche nur maximal zur Hälfte beleuchtet wird mit einer Trennlinie zwischen beleuchtetem Teil und unbeleuchtetem Teil, die in Ebenen parallel zur Translationsachse als Durchstoßpunkt der Normalen der Lichtaustrittsfläche durch die zu beleuchtende Fläche gegeben ist. Beleuchtet wird im Wesentlichen der Flächenteil, der der Lichteintrittsfläche abgewandt ist. In den übrigen Flächenbereich gelangen ausschließlich Lichtanteile durch eine Teilung der Lichtstrahlen, bei der Brechungen an der Lichtaustrittsfläche entstehen, also nur Licht mit stark verminderter Leuchtdichte.

Vorzugsweise ist die Lichtquelle als lang gestreckte Lampe, z.B. als Leuchtstofflampe ausgebildet und ist über und entlang der Lichteintrittsfläche, d.h. der schmalen Kante des Lichtleitkörpers angeordnet. Dabei ist es vorteilhaft, wenn die Lichtquelle bzw. die lang gestreckte Lampe als Aperturlampe ausgebildet ist, die einen schmalen Lichtaustrittsschlitz aufweist. Um eine Bündelung des Lichts in die Lichteintrittskante zu erzielen, können jedoch auch ein oder mehrere Reflektoren und/oder Optiken vorgesehen sein.

Um Licht seitlich in zwei entgegengesetzte Richtungen abstrahlen zu können, ist es vorteilhaft, zwei Lichtleitkörper seitlich nebeneinander anzuordnen, wobei nur eine lang gestreckte Lichtquelle vorgesehen sein muss.

Diese Anordnung wird vorteilhafterweise in einem flachen Gehäuse angeordnet, in dessen flachen Seitenwänden lang gestreckte Öffnungen entsprechend den Lichtaustrittsflächen vorgesehen sind. Besonders vorteilhaft ist, wenn die Anordnung mit einem oder zwei Lichtleitkörpern als Wegebeleuchtung kombiniert wird mit einer Rettungszeichenleuchte, wobei die Rettungszeichenleuchte eine Lichtleitscheibe mit das Rettungszeichung aufweisender Abstrahlfläche auf der Vorderseite aufweist und wobei die Lichtleitscheibe des Rettungszeichenmoduls vor dem mindestens einen Lichtleitkörper im Wesentlichen parallel zu diesem angeordnet ist. Diese Anordnung ist vorzugsweise in dem flachen Gehäuse aufgenommen, wobei die Vorderwand eine Ausnehmung für die Anzeige der Rettungszeichen und die Seitenwände die schlitzförmigen Öffnungen für die Abstrahlflächen der Wegebeleuchtung aufweisen.

Das Rettungszeichenmodul hat vorzugsweise eine eigene Lichtquelle, die entsprechend der Lichtquelle für die Wegebeleuchtung ausgerichtet sein kann.

Um kein Licht über die großen Deckflächen des bzw. der Lichtleitkörper der Wegebeleuchtung austreten zu lassen, können in vorteilhafte Weise diese Flächen reflektierend ausgebildet sein bzw. mit einem Reflektor versehen sein.

Ausführungsbeispiele der Erfindung sind in der Zeichnung dargestellt und werden in der nachfolgenden Beschreibung näher erläutert. Es zeigen:

Fig. 1      eine perspektivische Ansicht einer Notleuchte mit Wegebeleuchtungsmodul und Rettungszeichenmodul,

Fig. 2      eine schematische Ansicht eines Rettungszeichenmoduls,

Fig. 3      eine schematische Ansicht eines Wegebeleuchtungsmoduls,

Fig. 4      einen bei dem Wegebeleuchtungsmodul verwendeten Lichtleitkörper in der Aufsicht sowie jeweils die Seitenansichten der Begrenzungsflächen,

Fig. 5      den Lichtleitkörper entsprechend Fig. 4 mit möglichen Lichtverteilungskurven auf der Lichteintrittsfläche und der Lichtaustrittsfläche,

Fig. 6      den Lichtleitkörper nach den Fign. 4 und 5 mit in ihn eintretenden Lichtstrahlen,

Fig. 7      den Lichtleitkörper der Fign. 4 bis 6, an dem das Prinzip der Berechnung des Winkels für eine Begrenzung der Lichtabstrahlung entsprechend Fig. 5 gezeigt wird,

Fig. 8      den Lichtleitkörper mit einem Lichtstrahl, der unter flacheren Winkeln als der Grenzwinkel auf die Lichtaustrittsfläche trifft, und

Fig. 9      den Lichtleitkörper mit einem mit einem kleineren Winkel als den Grenzwinkel auf die Lichtaustrittsfläche auftreffenden Lichtstrahl.

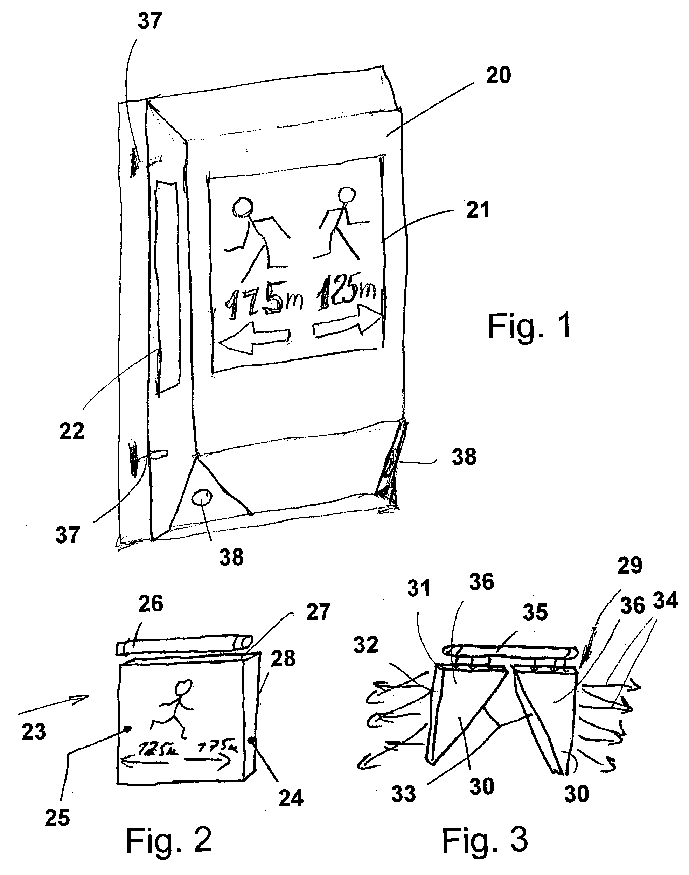

In Fig. 1 ist eine Notleuchte in perspektivischer Ansicht dargestellt, wie sie beispielsweise als Fluchtwegleuchte in Tunneln eingesetzt wird. Diese Leuchte weist drei Module auf, ein Rettungszeichenmodul entsprechend Fig. 2, ein Wegebeleuchtungsmodul entsprechend Fig. 3 und ein Orientierungslichtmodul. Diese Module sind in einem Gehäuse 20 aufgenommen, das für einen Wandaufbau konzipiert ist und das einen nach vorne weisenden Ausschnitt 21 für die Rettungszeichendarstellung und ein oder zwei lang gestreckte Öffnungen 22 für die Wegebeleuchtung parallel zur Wand umfasst.

Das Rettungszeichenmodul 23 besteht in bekannter Weise aus einer Lichtleitscheibe 24, üblicherweise aus klar transparentem Material, einem Träger 25 für Hinweiselemente bzw. Rettungszeichenelemente, der optisch dicht oder optisch getrennt auf die Lichtleitscheibe 24 aufgebracht ist, im vorliegenden Fall ist der Hinweisträger eine Piktogrammfolie, die auf die Lichtleitscheibe 24 aufgeklebt ist, und einer lang gestreckte Lichtquelle 26, die über der Lichteintrittskante 27 der Lichtleitscheibe 24 angeordnet ist. Die Lichtquelle 26 ist im vorliegenden Ausf ührungsbeispiel als Apertur-Leuchtstofflampe ausgebildet, es können jedoch auch eine Reihe von Leuchtdioden vorgesehen werden, die in die Lichteintrittskante 27 einstrahlen, wobei sie in die Begrenzungsflächen eingearbeitet sein können. Die Rückseite 28 der Lichtleitscheibe 24 ist mit einer reflektierenden Schicht versehen, die durch Aufrauung, Bedrucken oder Bekleben unter Vorsehung eines hohen Reflexionsgrades realisiert sein kann. Im vorliegenden Fall ist die Rückseite 28 mit Siebdruckpunkten zur Umlenkung des Lichts nach vorn für eine Ausstrahlung durch die Piktogrammfolie 25 versehen. Die übrigen Seitenkanten der Lichtleitscheibe können verspiegelt sein bzw. mit einer Spiegelschicht versehen sein. Selbstverständlich kann die Lichtquelle 26 mit einem Reflektor ausgerüstet sein, falls sie nicht als Aperturlampe ausgebildet ist, um eine Bündelung des Lichts zum Eintritt in die Lichtleitscheibe 24 zu erreichen.

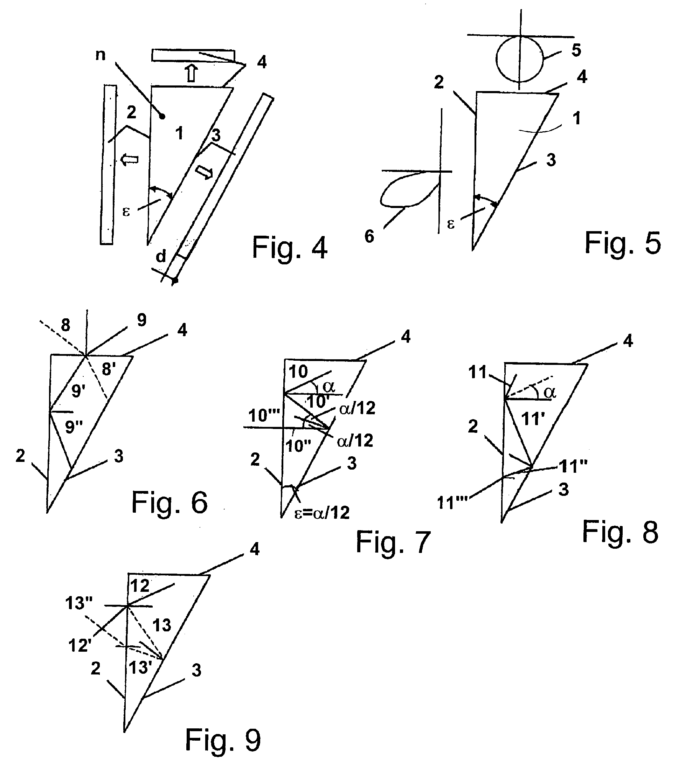

Das Wegebeleuchtungsmodul 29, das in Fig. 3 dargestellt ist, dient zur Ausleuchtung des Rettungsgehweges entlang und parallel zur Wand links und rechts von der Leuchte gesehen. Sie weist im vorliegenden Fall zwei dreieckförmige Lichtleitkörper 30 auf, die aus einem klar transparenten Material bestehen und deren "aktive Flächen" die schmalen Begrenzungsflächen oder -kanten sind, während die Deckflächen mit den größeren Flächenausdehnungen nicht oder nicht wesentlich zur Funktion beitragen. Die Lichtleitkörper 30 weisen eine Lichteintrittskante 31, eine im rechten Winkel dazu angeordnete Lichtaustrittsfläche oder - kante 32 sowie als dritte Begrenzungsfläche des Dreiecks eine Spiegelfläche 33 auf. Die Funktionsweise des Lichtleitkörpers wird weiter unten unter Bezugnahme auf die Fign. 4 bis 9 zusätzlich erläutert. Die Lichtaustrittsflächen 32 strahlen, wie durch die Pfeile 34 dargestellt, zur Seite und nach unten gerichtet ab. Die beiden Lichtleitkörper 30 sind in einer Ebene nebeneinander angeordnet, derart, dass die Lichteintrittskanten 31 über eine Lichtquelle 35 gestrahlt werden können, wobei auch hier eine Apertur-Leuchtstofflampe verwendbar ist. Wie schon in Zusammenhang mit dem Rettungszeichenmodul erläutert wurde, können jedoch auch hier andere Lichtquellen, z.B. LEDs oder dergleichen verwendet werden, wobei sie, der lang gestreckten Lichtquelle entsprechend, in Richtung entlang der Lichteintrittsfläche angeordnet sind.

Die Module gemäß Fig. 2 und Fig. 3 sind sandwichartig hintereinander angeordnet und in dem Gehäuse 20 aufgenommen. Vorzugsweise sind die großen Deckflächen 36 der Lichtleitkörper 30 des Wegebeleuchtungsmoduls 29 mit Reflektorblechen oder -folien versehen oder anderweitig reflektierend ausgebildet, um Licht nicht über diese großen Deckflächen austreten zu lassen. Die Lichtaustrittsflächen 32 der Wegebeleuchtung werden entsprechend den länglichen Öffnungen 22 im Gehäuse 20 angeordnet, während die die Rettungszeichen 25 tragende Lichtaustrittsfläche der Rettungszeichenleuchte 23 den Ausschnitt 21 des Gehäuses 20 einnimmt. Das Gehäuse kann aufklappbar gestaltet sein, was durch Scharniere 37 angedeutet ist.

Im unteren Teil des Gehäuses sind punktartig Orientierungsstrahler 38 des Orientierungslichtmoduls angeordnet, die beispielsweise als Strahler zur Durchdringung von Rauchschichten dienen und die aus großen Beobachtungswinkeln sichtbar sind. Als Lichtquellen können so genannte "Power-LEDs" dienen. Wie schon ausgeführt wurde, kann die in Fig. 1 dargestellte Leuchte mit geringer Aufbauhöhe realisiert werden, dies dank der flachen Wegebeleuchtung entsprechend Fig. 3, die anders als im Stand der Technik die schmalen Seitenkanten eines flachen Lichtleitkörpers in Dreieckform als Lichtaustrittsflächen verwendet.

In Fig. 4 ist nochmals ein Lichtleitkörper 1, wie er bei der Wegebeleuchtung nach Fig. 3 verwendet wird, dargestellt, der einen Brechungsindex n aufweist. Die Begrenzungsflächen 2, 3, 4 sind durch die Umklappungen um 90° dargestellt. Die Lichteintrittsfläche 4 ist im rechten Winkel zur Lichtaustrittsfläche 2 angeordnet, wobei die Fläche 2 eine größere Ausdehnung aufweist, da der über die Lichteintrittsfläche 4 einfallende Lichtstrom auf einen verkleinerten Abstrahlungsbereich gerichtet wird und somit höhere Lichtstärken erzeugt werden müssen. Alle Flächen sind plan und die Dicke des Lichtleitkörpers 1 ist mit d angegeben, wobei d im Normalfall sehr viel kleiner als die Länge der Lichteintritts- oder -austrittsfläche ist. Der Winkel zwischen Lichtaustrittsfläche 2 und der als Spiegelfläche ausgebildeten Begrenzungsfläche 3 beträgt ε. Die Größe dieses Winkels bestimmt die Lichtverteilung auf der Lichtaustrittsfläche 2.

Fig. 5 zeigt den Lichtleitkörper 1 mit möglichen Lichtverteilungen 5, 6 auf der Lichteintrittsfläche 4 bzw. der Lichtaustrittsfläche 2, dargestellt in Ebenen senkrecht zu denen der Lichteintrittsfläche 4 und der Lichtaustrittsfläche 2 in polarer Form. Die Lichtstärkeverteilung 5 mit diffuser Verteilung in alle Richtungen des der Lichteintrittsfläche 4 zugewandten Halbraumes wird durch den Lichtleitkörper 1 in die Lichtstärkeverteilung 6 umgewandelt, die bei entsprechendem Winkel ε nur in den der Lichteintrittsfläche 4 abgewandten Teil des Halbraumes strahlt.

In Fig. 6 sind in den Lichtleitkörper 1 bzw. in die Lichteintrittsfläche 4 eintretende Lichtstrahlen 8, 9 als Beispiel dargestellt, wobei zu erkennen ist, dass die Lichtstrahlen auf die Spiegelfläche 3 gelangen. Dies geschieht entweder ohne Umwege, wie an dem Lichtstrahl 8 und 8' zu erkennen ist, oder durch die Wirkung der Totalreflexion an der Lichtaustrittsfläche 2, wie durch die Lichtstrahlen 9, 9' und 9'' dargestellt ist.

Fig. 7 zeigt das Prinzip der Berechnung des Winkels ε für eine Begrenzung der Lichtabstrahlung gemäß Fig. 5. Ein Lichtstrahl 10 tritt unter dem Grenzwinkel der Totalreflexion gemäß der Formel

$$n \times \sin(\alpha) = 1$$

mit n als Brechungsindex und α als Grenzwinkel auf die Lichtaustrittsfläche 2. Unter kleineren Winkeln auftreffende Lichtstrahlen müssen nicht weiter betrachtet werden, weil sie durch die Lichtaustrittsfläche 2 hindurch in den Außenraum gelangen. Der unter dem Grenzwinkel auftreffende Lichtstrahl wird also total reflektiert entsprechend 10' und wird an der Spiegelfläche 3 in Richtung 10'' umgelenkt und gelangt bei Einhaltung eines Winkels ε=α/2 zwischen Spiegelfläche 3 und Lichtaustrittsfläche 2 senkrecht auf die Lichtaustrittsfläche 2 und verlässt diese in Richtung 10'''. Somit bildet der Lichtstrahl 10''' einen Grenzstrahl, über den hinaus kein reguläres Licht aus dem Lichtleitkörper 1 austritt. Dies ist in Fig. 8 anhand eines Lichtstrahls 11 dargestellt, der unter flacheren Winkeln als dem Grenzwinkel auf die Lichtaustrittsfläche 2 trifft. Dieser auftreffende Lichtstrahl wird zu 11' reflektiert, gelangt auf die Spiegelfläche 3, wird abermals zu Lichtstrahl 11'' reflektiert und wird dann an der Lichtaustrittsfläche 2 umgelenkt und tritt als Lichtstrahl 11''', schräg nach unten gerichtet aus.

In Fig. 9 ist ein auf die Lichtaustrittsfläche 2 unter kleinerem Winkel als dem Grenzwinkel auftreffender Lichtstrahl 12 dargestellt, der in Richtung 12' in den Außenraum gelangt. Ein Anteil des Lichtstrahls 12 wird jedoch an der Grenzfläche reflektiert und gelangt als Lichtstrahl 13, jedoch mit verminderter Leuchtdichte, auf die Spiegelfläche 3, wird dort umgelenkt in Richtung 13' und gelangt schließlich als Lichtstrahl 13" in den für die reguläre Lichtabstrahlung gesperrten Außenraum, allerdings mit durch die verminderte Leuchtdichte bewirkte geringeren Lichtstärke, so dass Blendung in dieser Richtung vermieden wird.

In dem beschriebenen Ausführungsbeispiel ist eine Wandaufbauleuchte beschrieben, bei der das Rettungszeichen nach vorn abstrahlt. Es ist jedoch auch denkbar, dass zwei Rettungszeichenmodule das Wegebeleuchtungsmodul sandwichartig zwischen sich nehmen, so dass die Abstrahlung nach vorn und nach hinten durch die Rettungszeichenmodule und seitlich in eine oder beide Richtungen durch das Wegebeleuchtungsmodul stattfindet.

**Patentansprüche**

1. Notleuchte zur Beleuchtung eines Fluchtweges mit mindestens einem Lichtleitkörper aus klar transparentem Material, der mindestens eine Lichteintrittsfläche und Lichtaustrittsfläche aufweist und mindestens eine Lichtquelle zur Einstrahlung von Licht in die Lichteintrittsfläche vorgesehen ist, wobei der Lichtleitkörper im Wesentlichen scheiben- oder plattenförmig mit im Vergleich zu den Deckflächen schmaleren Seitenkanten ausgebildet ist,
**dadurch gekennzeichnet, dass**
der Lichtleitkörper (1, 30) dreieckförmig ausgebildet ist und das Dreieck von den planen Seitenkanten begrenzt wird, wobei eine erste der Seitenkanten (4, 31) die Lichteintrittsfläche und eine zweite der Seitenkanten (32, 2), die im rechten Winkel zur ersten Seitenkante angeordnet ist, die Lichtaustrittsfläche bildet und wobei die dritte der Seitenkanten (3, 33) verspiegelt ist.

2. Notleuchte nach Anspruch 1, **dadurch gekennzeichnet, dass** der Winkel zwischen verspiegelter dritten Seitenkante (33, 3) und Lichtaustrittsfläche (32, 2) näherungsweise gleich oder kleiner als der halbe Grenzwinkel der Totalreflexion des Materials ist, aus dem der Lichtleitkörper gebildet ist.

3. Notleuchte nach Anspruch 1 oder Anspruch 2, **dadurch gekennzeichnet, dass** die Lichtquelle lang gestreckt ausgebildet und über der Lichteintrittsfläche angeordnet ist.

4. Notleuchte nach einem der Ansprüche 1 bis 3, **dadurch gekennzeichnet, dass** zwei Lichtleitkörper (30) seitlich nebeneinander angeordnet sind, derart, dass die jeweilige Lichtaustrittsfläche (32) in der entgegengesetzten Richtung zu der anderen Lichtaustrittsfläche abstrahlt.

5. Notleuchte nach Anspruch 4, **dadurch gekennzeichnet, dass** eine lang gestreckte Lichtquelle (35) über beiden Lichteintrittsflächen angeordnet ist.

6. Notleuchte nach einem der Ansprüche 1 bis 5, **dadurch gekennzeichnet, dass** der Winkel zwischen Lichtaustrittsfläche und als Spiegelfläche ausgebildeter dritten Seitenkante in Abhängigkeit von gewünschten Lichtverteilung auf der Lichtaustrittsfläche gewählt ist.

7. Notleuchte nach einem der Ansprüche 1 bis 6, **dadurch gekennzeichnet, dass** Lichtleitkörper und mindestens eine Lichtquelle als Wegebeleuchtungsmodul in einem flachen Gehäuse (20) angeordnet ist, das in mindestens einer Seitenwand, gegebenenfalls in beiden Seitenwänden lang gestreckte Öffnungen (22) entsprechend der oder den Lichtaustrittsflächen aufweist.

8. Notleuchte nach einem der Ansprüche 1 bis 7, **dadurch gekennzeichnet, dass** parallel zu dem Wegebeleuchtungsmodul ein Rettungszeichenmodul angeordnet ist, wobei parallel zu dem mindestens einen Lichtleitkörper (1, 30) eine Lichtleitscheibe (24) mit mindestens einem Rettungszeichen (25) auf der die Abstrahlfläche bildenden Vorderseite angeordnet ist, wobei der mindestens eine Lichtleitkörper an der der Vorderseite entgegensetzten Rückseite liegt.

9. Notleuchte nach Anspruch 8, **dadurch gekennzeichnet, dass** das Rettungszeichen auf einer Folie (25) angeordnet ist, die mit der Vorderseite der Lichtleitscheibe (24) verbunden ist, wobei die Rückseite (28) mit Mitteln zum Umlenken des Lichts auf die Vorderseite versehen ist.

10. Notleuchte nach einem der Ansprüche 1 bis 9, **dadurch gekennzeichnet, dass** die Deckflächen (36) des Lichtleitkörpers (30) mit einem Reflektor versehen oder reflektierend ausgebildet sind.

11. Notleuchte nach einem der Ansprüche 1 bis 7, **dadurch gekennzeichnet, dass** das flache Gehäuse (20) an seiner Vorderseite eine Öffnung (21) für die Abstrahlfläche mit Rettungszeichen der Lichtleitscheibe (24) aufweist.

12. Notleuchte nach einem der Ansprüche 8 bis 11, **dadurch gekennzeichnet, dass** der Lichtleitscheibe (24) eine eigene Lichtquelle (26) zugeordnet ist.

13. Notleuchte nach einem der Ansprüche 1 bis 12, **dadurch gekennzeichnet, dass** die mindestens eine Lichtquelle eine lang gestreckte Aperturlampe ist.

**14.** Notleuchte nach einem der Ansprüche 1 bis 12, **dadurch gekennzeichnet, dass** der Lichtquelle (35, 26) ein Reflektor und/oder eine Optik zugeordnet ist.

**15.** Notleuchte nach einem der Ansprüche 1 bis 14, **dadurch gekennzeichnet, dass** die Diode d der das Dreieck bildenden Lichteintrittsfläche, der Lichtaustrittsfläche und der Spiegelfläche sehr viel kleiner als ihre jeweilige Länge ist.

Fig. 1

Fig. 2

Fig. 3

Fig. 4

Fig. 5

Fig. 6

Fig. 7

Fig. 8

Fig. 9

**Europäisches Patentamt**

## EUROPÄISCHER RECHERCHENBERICHT

Nummer der Anmeldung

EP 03 09 0288

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 442 522 A (KALMANASH MICHAEL H) 15. August 1995 (1995-08-15) | 1,3,10, 12,14 | G02B6/00 |
| Y | * Spalte 4 - Spalte 5; Abbildungen 3-6 * --- | 15 | |
| Y | US 5 438 453 A (KUGA KAEKO) 1. August 1995 (1995-08-01) *, Satz 61 - Satz 64; Abbildungen 1-5 * ----- | 15 | |
| | | | **RECHERCHIERTE SACHGEBIETE (Int.Cl.7)** |
| | | | G02B |

Der vorliegende Recherchenbericht wurde für alle Patentansprüche erstellt

| Recherchenort | Abschlußdatum der Recherche | Prüfer |
|---|---|---|
| DEN HAAG | 5. November 2003 | Malic, K |

## ANHANG ZUM EUROPÄISCHEN RECHERCHENBERICHT
## ÜBER DIE EUROPÄISCHE PATENTANMELDUNG NR.

EP 03 09 0288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-11-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5442522 | A | 15-08-1995 | KEINE | | |
| US 5438453 | A | 01-08-1995 | JP | 3131034 B2 | 31-01-2001 |
| | | | JP | 6059252 A | 04-03-1994 |

EPO FORM P0481

Für nähere Einzelheiten zu diesem Anhang : siehe Amtsblatt des Europäischen Patentamts, Nr.12/82